# FASCICULE DE BREVET EUROPEEN

(11) **EP 1 148 928 B1**
(45) Date de publication et mention de la délivrance du brevet: **07.01.2004**
(21) Numéro de dépôt: 00900653.7
(22) Date de dépôt: 25.01.2000
(51) Int. Cl.: B01D 53/14, B01D 53/18, F26B 25/00

(54) **DESHYDRATEUR A COMPRESSION MECANIQUE DE LA VAPEUR, INSTALLATION ET PROCEDE POUR L'EPURATION CHIMIQUE DE LA VAPEUR**
TROCKNER MIT MECHANISCHER VERDICHTUNG DES DAMPFES, ANLAGE UND VERFAHREN ZUR CHEMISCHEN REINIGUNG DES DAMPFES
DEHYDRATOR WITH MECHANICAL VAPOUR COMPRESSION, INSTALLATION AND METHOD FOR CHEMICAL PURIFICATION OF THE VAPOUR

(30) Priorité: 28.01.1999 FR 9901134
(43) Date de publication de la demande: 31.10.2001
(73) Titulaire: Sirven, 29260 Lesneven (FR)
(72) Inventeur: BOURDEL, Jacques, F-38410 Saint-Martin d'Uriage (FR)
(74) Mandataire: Branger, Jean-Yves
(86) Numéro de dépôt international: PCT/FR2000/000153
(87) Numéro de publication internationale: WO 2000/044475

(56) Documents cités:
- US-A- 3 991 480
- US-A- 4 926 764
- US-A- 5 810 975

## Description

La présente invention concerne un déshydrateur à compression mécanique de la vapeur et un procédé de traitement de la vapeur dans un tel désydrateur, afin d'en assurer l'épuration chimique.

Elle concerne également une installation d'épuration associée audit déshydrateur.

Un déshydrateur à compression mécanique de la vapeur est un déshydrateur comportant une paroi d'échange thermique dont l'une des faces est adaptée pour recevoir la matière à déshydrater, laquelle est déposée sur cette face sous la forme d'une couche mince.

Cette face chaude se trouve à l'intérieur d'une enceinte dite d'évaporation.

La matière déposée sur la face chaude est déshydratée, l'eau et les autres substances volatiles qu'elle contient s'évaporant à l'intérieur de l'enceinte d'évaporation.

La vapeur est prélevée dans cette enceinte, et est comprimée mécaniquement au moyen d'un compresseur, puis est introduite dans une seconde enceinte, dite de condensation, dans laquelle se trouve l'autre face de la paroi d'échange thermique.

Grâce à cet agencement, la quantité de chaleur qui se dégage par condensation de la vapeur dans la chambre de condensation, est transmise à la matière par conduction à travers la paroi d'échange thermique à l'autre face du disque, et cette quantité de chaleur va servir à évaporer un volume équivalent de liquide se trouvant dans la couche de matière à déshydrater, qui est étalée sur cette face.

Ainsi, la chaleur émise par la condensation est récupérée pour l'évaporation, ce qui permet de travailler avec un faible apport d'énergie, correspondant à peu près à l'énergie mécanique requise pour comprimer la vapeur.

Ce type de déshydrateur est particulièrement adapté au traitement d'un lisier d'élevage, et notamment, du lisier porcin ; on travaille alors à une pression de 1 bar environ et à une température de l'ordre de 100° C dans l'enceinte d'évaporation, et à une pression de 1,4 bar environ et une température de l'ordre de 110° C dans l'enceinte de condensation.

La paroi d'échange thermique est généralement une paroi mobile, à trajectoire cyclique, la matière humide étant déposée sur la face chaude en début de cycle, tandis que les résidus secs sont enlevés de la face chaude par raclage en fin de cycle.

Dans un type de déshydrateur à compression mécanique de la vapeur connu, décrit dans le document WO-93/16005 -qui correspond au document US-A-5,810,975-, les parois d'échange thermique sont les parois supérieures d'un empilement de disques creux horizontaux, montés sur un arbre tubulaire coaxial, d'axe vertical, qui est entraîné en rotation, à une vitesse continue et uniforme.

A titre indicatif, le nombre de disques de l'empilement est de trente par exemple ; chaque disque a un diamètre de l'ordre de 2 mètres, et tourne à une vitesse relativement lente, de l'ordre de 0,33 tour/minute.

L'ensemble de disques est disposé à l'intérieur d'une cuve qui constitue l'enceinte d'évaporation ; l'enceinte de condensation est constituée par l'espace intérieur des disques et de l'arbre tubulaire, lequel communique avec chacun des disques.

La présente invention concerne également un procédé pour épurer chimiquement la vapeur qui est produite dans l'enceinte d'évaporation d'un déshydrateur selon l'invention.

Elle est particulièrement adaptée pour le traitement de lisiers d'élevage, et notamment du lisier de porcs, traitement pour lequel il est nécessaire d'opérer avec un prix de revient extrêmement bas et, corrélativement, de recourir à des solutions dans lesquelles la consommation énergétique est extrêmement faible.

En effet, pour que le procédé de traitement d'un lisier soit acceptable commercialement, l'énergie de traitement doit être inférieure à environ 50 kWh/m³ de lisier, et de préférence inférieure à 30 kWh/m³.

Pour atteindre cet objectif, il faut que les mécanismes de condensation de la vapeur dans l'enceinte de condensation, à l'intérieur des disques si on a affaire à un déshydrateur du type mentionné plus haut, ne soient pas contrariés par la présence de gaz incondensables ou de substances dont la température de condensation est inférieure à celle de l'eau.

Dans diverses matières à déshydrater, et en particulier dans le lisier de porcs, les produits volatils qui s'évaporent en même temps que l'eau pendant la déshydratation représentent une masse importante, de l'ordre de 15 à 25kg/m³ de lisier.

Dans ces produits on trouve de nombreuses substances très différentes les unes des autres, en particulier du gaz carbonique (CO₂), de l'ammoniac (NH₃), différents acides gras volatils (AGV), de la famille [CH₃ (CH₂)ₙ COOH], allant de l'acide acétique [CH₃COOH] à de l'acide caprique [CH₃(CH₂)₈ COOH] , des phénols et des solvants tels que de l'alcool, des éthers, des cétones, des aldéhydes, etc.

Certains de ces produits sont incondensables dans les conditions de pression (1 bar) et de température (100° C) qui sont mises en oeuvre ; c'est le cas du gaz carbonique, de l'ammoniac, de l'air éventuellement, du méthane et de l'hydrogène si il y a eu fermentation.

Dans les produits volatiles difficiles à condenser, on trouve les solvants, des acides gras volatils (AGV) et des phénols.

Pour obtenir un bon fonctionnement du déshydrateur, il faut d'abord éliminer le plus possible de ces produits indésirables, et ensuite faire en sorte que les produits résiduels ne soient pas gênants.

On effectue par conséquent une épuration préalable de la matière à déshydrater.

Ainsi par exemple, la matière à déshydrater passe préalablement dans un dispositif échangeur - dégazeur, qui assure son préchauffage à une température de l'ordre de 85° C par exemple.

La matière, telle que le lisier de porcs, contient très souvent des carbonates d'ammonium qui se dissocient à partir de 50° C en dioxyde de carbone (CO₂) et ammoniac (NH₃), si bien que pendant ce préchauffage dans l'échangeur, la matière perd une grande partie du dioxyde de carbone accompagné de vapeur d'eau et d'autres gaz parasites ; en revanche, l'ammoniac reste presque entièrement en solution dans le produit.

Ensuite, on laisse avantageusement reposer la matière pendant plusieurs heures dans des cuves réchauffées de dégazage et de démoussage, pour les amener à une température de l'ordre de 98° C, juste avant leur épandage sur la face chaude du déshydrateur.

Ainsi, en arrivant dans le déshydrateur, la matière a déjà perdu entre 75 et 90 % de son dioxyde de carbone, et ce prétraitement est particulièrement intéressant sur le plan économique.

Un objectif de la présente invention est d'empêcher la formation de poches inertes d'incandensables ou de vapeurs parasites lors de la circulation de la vapeur dans le déshydrateur.

Le déshydrateur à compression mécanique qui fait l'objet de l'invention, possède un compresseur et une enceinte de condensation qui est constituée par un empilement de disques creux horizontaux communicants, portés par un arbre central tubulaire rotatif, d'axe vertical, cet empilement étant installé à l'intérieur d'une cuve constituant l'enceinte d'évaporation, la matière à déshydrater étant épandue sous forme d'une couche mince sur la face supérieure des disques

Ce déshydrateur est remarquable en ce qu'à l'intérieur de chaque disque est montée une cloison discoïde horizontale fixée à l'arbre central, et de diamètre inférieur à celui des disques creux, cette cloison étant espacée par rapport aux deux faces horizontales du disque, et constituant une chicane pour le cheminement de la vapeur.

Par ailleurs, selon un certain nombre de caractéristiques additionnelles possibles de ce déshydrateur :
- ledit système récupérateur de chaleur comprend un serpentin qui est immergé dans un bac d'eau disposé à l'intérieur de l'enceinte d'évaporation, dans lequel on fait passer les vapeurs véhiculant les gaz incondensables ;
- il comporte des moyens pour ramener dans le bac l'eau de condensation présente dans les vapeurs à la sortie dudit serpentin ;
- il comporte un brûleur apte à brûler les gaz incondensables à leur sortie.

Un autre objectif de la présente invention est d'éliminer par épuration chimique la vapeur générée dans l'enceinte d'évaporation au cours du traitement de déshydratation, afin d'en éliminer toutes - ou pratiquement toutes - les substances indésirables mentionnées plus haut, en particulier le dioxyde de carbone l'ammoniac, les AGV, les phénols et autres solvants.

A cet effet, l'invention a également pour objet une installation d'épuration de la vapeur associée à un déshydrateur selon l'invention.

Conformément à l'invention, cette installation comprend un ensemble d'épurateurs montés en série à la suite les uns des autres, des moyens pour amener la vapeur à épurer à l'entrée de cet ensemble, et des moyens pour évacuer la vapeur traitée vers le compresseur équipant le déshydrateur, chacun des épurateurs affectant la forme d'un caisson à l'intérieur duquel sont disposés des moyens aptes à générer, par centrifugation, une pluie de gouttelettes d'une solution épuratrice que la vapeur, qui est portée à une température sensiblement égale à 100°C, est obligée de traverser, et que l'une au moins des pluies est de l'eau, qu'une autre au moins contient un acide et qu'une troisième au moins contient une base.

De préférence, ledit ensemble comprend au moins trois batteries de plusieurs épurateurs l'une assurant un traitement de la vapeur à l'eau, l'autre assurant un traitement à l'acide, et l'autre assurant un traitement basique.

Avantageusement, chacune desdites batteries est reliée à une cuve distincte recueillant les solutions ayant servi au traitement.

Enfin, dans le procédé selon l'invention qui met en oeuvre le déshydrateur ou l'installation selon l'invention on prélève la vapeur dans l'enceinte de condensation du déshydrateur et on la fait passer successivement, avant de la comprimer, à une température sensiblement égale à 100° C, dans une série d'épurateurs, et on la force à traverser, dans chacun de ces épurateurs, une pluie contenant une solution épuratrice, l'une au moins des pluies étant de l'eau, une autre contenant un acide, et une autre contenant une base.

Par ailleurs, selon d'autres caractéristiques possibles du procédé :
- l'acide est une solution comprenant de l'acide sulfurique et de l'acide nitrique ;
- la base est une solution de chaux, de potasse ou de soude ;
- on génère la pluie au moyen d'un tube rotatif percé d'une multitude de petits trous à l'intérieur duquel se trouve la solution, celle-ci étant projetée par centrifugation sous forme de fines gouttelettes à l'extérieur du tube.

D'autres caractéristiques et avantages de l'invention apparaîtront de la description et des dessins annexés qui en représentent un mode de réalisation préféré.

Sur ces dessins :
- la figure 1 est un schéma général d'une installation conforme à l'invention, qui équipe un déshydrateur à disques creux ;
- la figure 2 est une vue schématique, en coupe axiale, de l'un des épurateurs composant l'installation ;
- les figures 3 et 4 sont des vues schématiques de ce même épurateur, de dessus, et respectivement de côté et en coupe, le plan de coupe étant le plan brisé référencé **IV-IV** sur la figure 3 ;
- la figure 5 est une vue générale de l'épurateur.

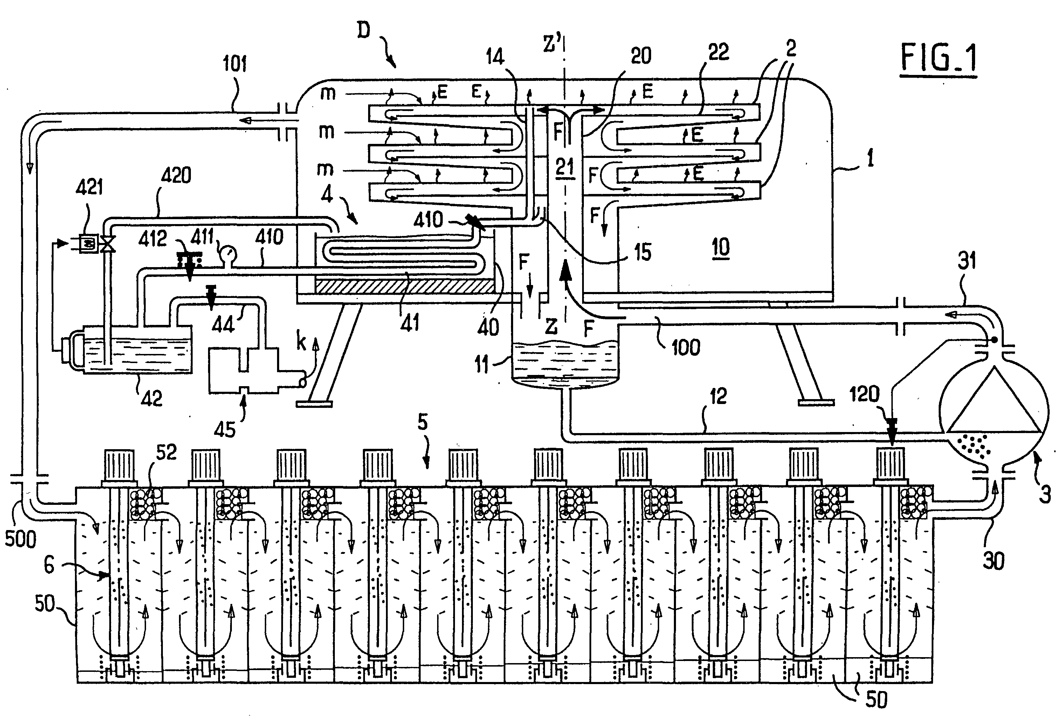

Sur la figure 1 on a désigné par la référence 1 la cuve d'un déshydrateur à compression mécanique de la vapeur, dont l'espace intérieur 10 constitue l'enceinte d'évaporation. A l'intérieur de cette enceinte est monté un empilement de disques creux 2 identiques, portés par un arbre tubulaire central 20, d'axe vertical **Z Z'**.

Les disques creux 2 ont une face supérieure lisse, plane et horizontale sur laquelle la matière à déshydrater est épandue sous forme d'une couche mince, cet épandage étant symbolisé par les flèches **m**.

Sur la figure, on a représenté seulement trois disques, afin de ne pas l'alourdir inutilement. Il va de soi que le nombre de disques est en réalité supérieur à trois, par exemple égal à trente.

L'arbre tubulaire 20 est entraîné en rotation autour de son propre axe vertical **Z Z',** à une vitesse uniforme.

Au cours d'un tour, la couche de matière déposée sur les disques se déshydrate sous l'effet de la chaleur, et l'eau ainsi que les autres substances volatiles contenues dans la matière s'évaporent dans l'enceinte 10, comme cela est symbolisé par les petites flèches **E**.

Des moyens de raclage non représentés enlèvent les résidus solides et secs qui se trouvent sur les disques à la fin d'un tour de rotation.

A l'intérieur de chacun des disques 2 est disposée une cloison discoïde horizontale 22 qui est fixée par le bord de son trou central sur le tube 20.

Chaque cloison 22 a un diamètre un peu plus petit que celui du disque, et est centré sensiblement à mi-hauteur de chaque disque, de sorte qu'un espace est ménagé entre cette cloison et les parois supérieure et inférieure du disque.

Le déshydrateur comporte un compresseur 3 dont la sortie 31 communique, par l'intermédiaire d'un conduit 100, avec la base de l'arbre tubulaire 20. Ce dernier communique en partie haute avec le disque 2 supérieur, cette communication se faisant au-dessus de la cloison 22 se trouvant dans ce disque supérieur.

L'ensemble des espaces intérieurs des disques se trouvent en communication les uns avec les autres (et avec l'intérieur de l'arbre 21), cet espace constituant l'enceinte de condensation dans laquelle arrive la vapeur comprimée.

A la base de l'enceinte de condensation se trouve un réceptacle 11 qui récupère le condensat ; un conduit 12 permet de le ramener au compresseur 3, via une vanne motorisée 120, dont la fonction sera expliquée plus loin.

A l'intérieur de l'enceinte de condensation se trouve une double tubulure 14, 15 qui communique avec un serpentin tubulaire 41, lequel est immergé dans l'eau contenue dans un bac 40, situé à l'intérieur de l'enceinte d'évaporation 10, constituant un échangeur de récupérateur de chaleur 4, dont la fonction sera également expliquée plus loin.

On notera que l'une des tubulures, référencée 14, débouche au dessus de la cloison du disque supérieur, tandis que l'autre, 15, débouche en dessous de la cloison du disque inférieur.

Entre cette double tubulure 14, 15 et le serpentin 41 est montée une vanne 410.

Il convient de préciser que la figure 1 est très schématique ; l'ensemble arbre tubaire 20/ disques creux 2 étant tournant, il va de soi que leur branchement sur la conduite 100, la double tubulure 14, 15 et le réceptacle 11, qui sont fixes, et sont agencés en conséquence, cette adaptation étant à la portée de l'homme du métier.

Le serpentin 41 se prolonge, à l'extérieur de la cuve 1, par un conduit 410, lequel débouche dans un séparateur des phases gazeuses et liquides.

Sur ce conduit se trouve un manomètre 411 et une soupape 412 de réglage de la pression dans le serpentin.

L'eau qui se condense dans le séparateur 42 est ramenée dans le bac 40 par un conduit de retour 420, via une électro-vanne 421, dont le fonctionnement est piloté automatiquement en fonction du niveau d'eau présent dans le séparateur 42.

Les gaz sont évacués du séparateur 42 par un conduit 44 en direction d'un brûleur 45, qui a pour fonction de pyrolyser ces gaz incondensables et les vapeurs diverses malodorantes. A la sortie du brûleur, les fumées qui en sortent, symbolisées par la flèche k, sont parfaitement inodores.

L'installation d'épuration selon l'invention, qui porte la référence 5, est composée d'un ensemble d'épurateurs chimiques 50 identiques, branchés en série.

La vapeur prélevée dans l'enceinte d'évaporation 10 est amenée en amont cet épurateur 5, au moyen d'une conduite 101, qui se raccorde à une tubulure 500 d'entrée dans l'épurateur. La tubulure de sortie de l'épurateur, référencée 30, est branchée à l'entrée du compresseur 3.

Le cheminement des vapeurs à l'intérieur du déshydrateur et de l'épurateur est symbolisé par des flèches.

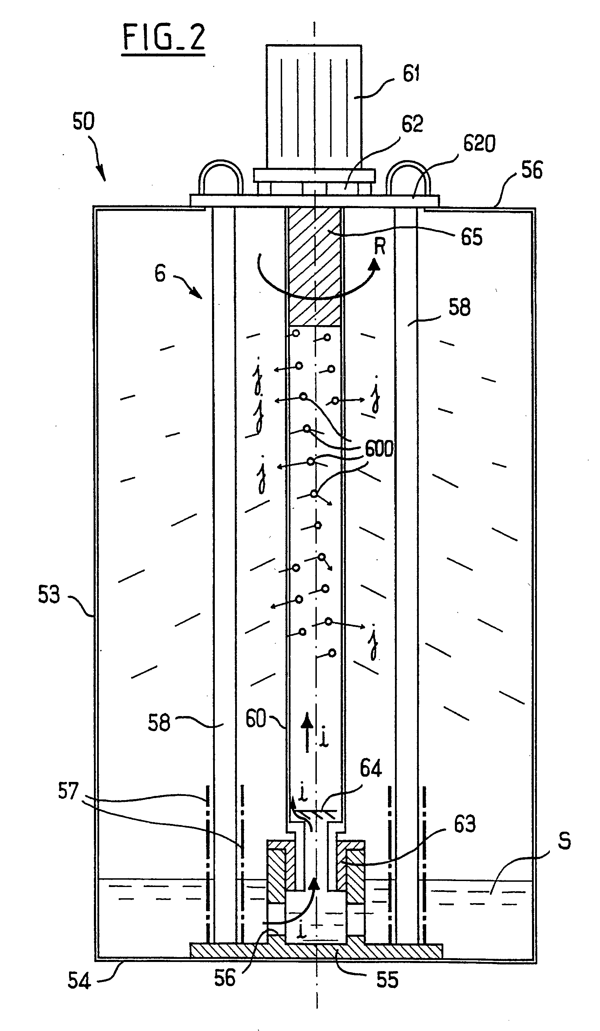

En référence aux figures 2 à 4, nous allons maintenant décrire la structure d'un épurateur élémentaire 50.

Celui-ci consiste en un caisson de forme parallélépipèdique rectangle, de section horizontale carrée, et dont les grands côtés constituent la hauteur, les grands côtés étant verticaux.

A titre indicatif, chaque caisson 50 a un côté de 120 cm et une hauteur de 250 cm.

La paroi latérale du caisson est référencée 53, et son fond 54.

A l'intérieur du caisson est monté un système d'aspersion d'une solution chimique ayant des propriétés d'épuration de la vapeur.

Ce système 6 comprend un tube cylindrique vertical 60, qui est monté au centre du caisson. Ce tube est guidé à sa base dans un palier 63 porté par un support fixe 55 solidaire du fond 54. A sa partie haute, il est guidé dans un palier 62 porté par un socle 620, dont la zone de bordure repose contre le bord d'une ouverture de forme correspondante prévue dans la paroi supérieure 56 du caisson.

Le support inférieur 55 et le socle 620 sont reliés par des profilés verticaux 58, par exemple au nombre de quatre.

Le socle 620 supporte un moteur électrique 61, apte à entraîner le tube 60 en rotation autour de son axe. A titre indicatif, le tube 60 a un diamètre compris entre 80 et 200 mm, par exemple de 115 mm environ.

La paroi cylindrique du tube 60 est percée d'une multitude de petits trous régulièrement répartis sur toute sa longueur.

A titre indicatif, il est prévu plusieurs centaines de petits trous, dont le diamètre est compris entre 0,5 et 2 mm, par exemple de l'ordre de 1 mm.

La partie supérieure du tube est obturée par un bouchon 65.

Sa partie inférieure est ouverte et comporte une petite turbine 64.

Le support inférieur 55 présente des ouvertures latérales 56 qui autorisent le passage d'un produit liquide, en l'occurrence une solution d'épuration, qui a été introduite dans le caisson, et dans lequel baigne la base ouverte du tube 60.

Cette solution **S** peut par conséquent pénétrer dans l'ouverture inférieure du tube à travers les trous 56, avant d'être aspirée vers le haut, à l'intérieur du tube en rotation, grâce à la turbine 64, comme symbolisé par les flèches i.

Le produit liquide monte par conséquent à l'intérieur du tube, et est expulsé par centrifugation à travers les trous 600 comme symbolisé par les flèches **j,** pour former une pluie de fines gouttelettes balayant et occupant tout l'espace intérieur du ca isson.

A la base du système asperseur est disposé un filtre 57 ; il s'agit, dans l'exemple illustré, d'une paire de toiles cylindriques concentriques, d'axe vertical qui sont posées sur le support 55, de chaque côté des profilés 58.

Le rôle de ce filtre est d'empêcher que des particules solides présentes dans la solution **S** ne pénètrent dans le tube 60, ce qui risqueraient de colmater les trous 600.

En partie haute du caisson sont prévues, sur l'une de ses faces latérales une embouchure d'entrée 500, et sur la face opposée une embouchure de sortie 501 de la vapeur.

Ces embouchures ont une section rectangulaire.

A l'intérieur du caisson 50 est montée une cloison verticale 51, qui s'étend en diagonale de chaque côté du système asperseur 6, et est fixée à deux angles diamétralement opposés du caisson.

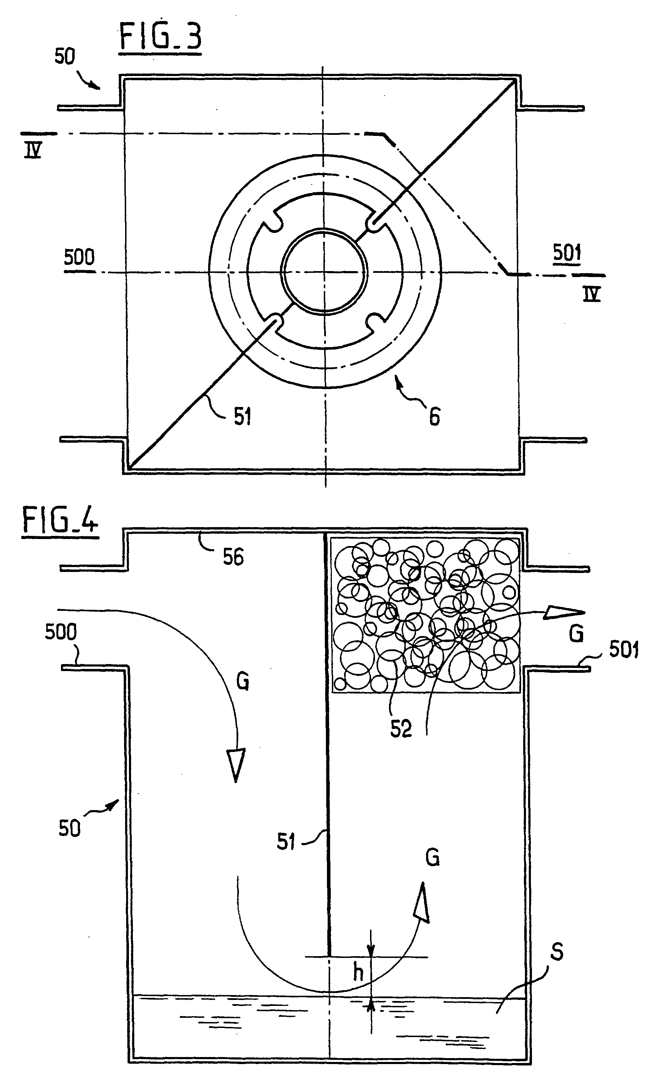

Comme on le voit sur la figure 4, cette cloison 51 est fixée en partie haute à la paroi supérieure 56 du caisson ; sa hauteur est sensiblement plus petite que la hauteur du caisson, si bien que son bord inférieur se trouve à une certaine distance **h** au dessus du niveau de la solution **S**, ménageant un espace pour le passage de la vapeur, dont la circulation est symbolisée par les flèches **G**.

On comprend que, grâce à cette disposition, la vapeur qui parcourt le caisson de l'embouchure 500 vers l'embouchure 501 est obligée de passer sous la cloison 51, qui joue le rôle d'une chicane ; la vapeur est par conséquent forcée de traverser deux fois la pluie générée par le système asperseur 6, d'abord en la traversant du haut vers le bas, puis du bas vers le haut.

L'espace supérieur du compartiment aval du caisson (du côté de la sortie par rapport à la cloison 51) est occupé par un dispositif 52, qu'on appellera conventionnellement "dévésiculeur". Il s'agit d'un tampon composé de petits copeaux en matière plastique ou en acier inoxydable, dont la fonction est d'éliminer de la vapeur en circulation les particules solides et/ou les gouttelettes relativement volumineuses, de sorte que la vapeur quitte le caisson sous la forme de buée composée de gouttelettes extrêmement fines.

De préférence, les dimensions de l'épurateur et l'aire des embouchures d'entrée et de sortie sont déterminées pour que la vitesse de la vapeur à l'intérieur du caisson soit comprise entre 0,5 et 0,75m/seconde.

La hauteur de la solution d'épuration dans le caisson est de quelques dizaines de centimètres.

La vitesse de rotation du tube asperseur 60 est choisie pour que les jets de solution sortent à une vitesse ni trop lente ni trop rapide.

A titre indicatif cette vitesse est de l'ordre de 1 400 tr/mn.

Les problèmes de cavitation sont beaucoup moins gênants qu'avec des pompes classiques.

La maintenance de l'épurateur est très aisée car l'asperseur peut être sorti en bloc du caisson par l'ouverture prévue dans la paroi supérieure 56.

Les différents caissons sont montés en série

Selon une caractéristique importante de l'invention, l'un au moins des épurateurs produit une pluie d'eau, un autre produit une pluie d'acide fort, et un autre une pluie de base forte.

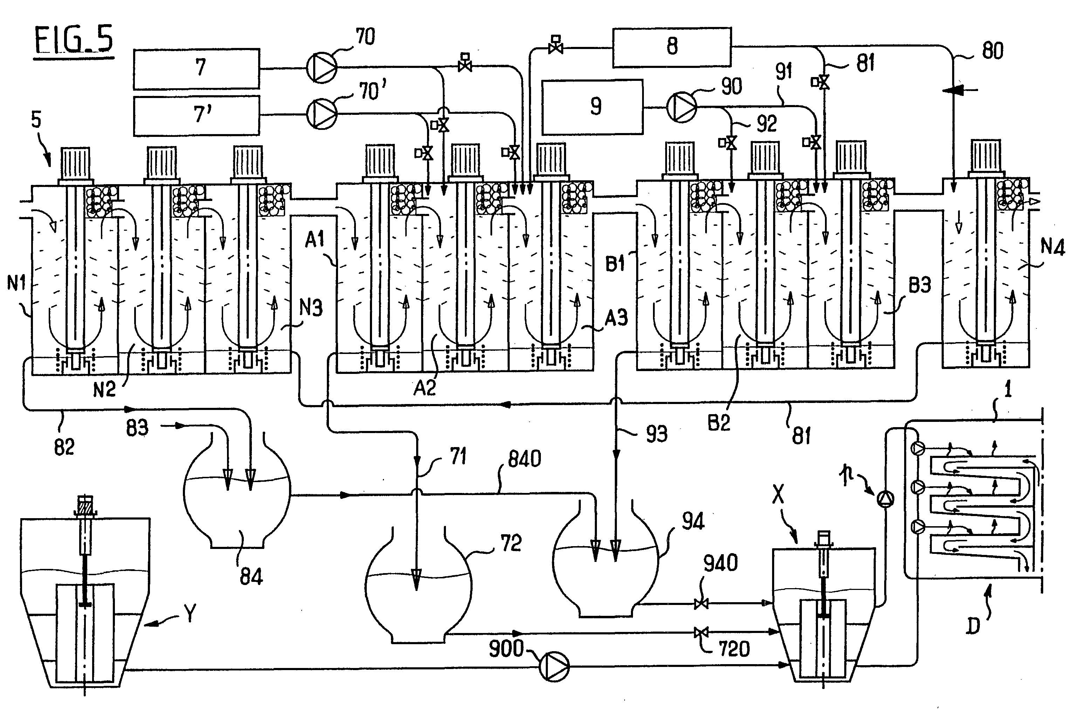

De préférence, et comme cela est illustré sur la figure 5, il est prévu pour chaque type d'aspersion une batterie de caissons juxtaposés.

Sur cette figure, on a désigné par la référence **N** - comme "neutre" - les épurateurs d'aspersion d'eau, par la référence **A** - comme "acide" - les épurateurs d'aspersion d'acide et par **B** - comme "base" - les épurateurs d'aspersion de base.

A chacune de ces lettres, **N, A**, ou **B,** est affecté un chiffre, qui correspond à l'ordre de l'épurateur dans l'installation, en tenant compte du sens de circulation de la vapeur dans cette dernière.

Il est prévu successivement, de l'aval vers l'amont si on considère ce sens de déplacement de la vapeur, une batterie de trois asperseurs d'eau juxtaposés **N1, N2, N3,** une batterie de trois asperseurs d'acide juxtaposés **A1, A2, A3,** une batterie de trois asperseurs de base juxtaposés **B1, B2, B3,** ainsi qu'un quatrième asperseur d'eau, **N4.**

Au sein d'une même batterie, la solution passe d'un caisson à l'autre en sens inverse de celui de la vapeur, grâce à un système de "trop plein" de type connu, le niveau de la solution contenue dans le dernier bac affecté de l'indice 3 étant plus haut que celui du bac central affecté de l'indice 2, lequel est lui-même plus haut que celui du premier bac affecté de l'indice 1.

Des branchements appropriés sont prévus pour que la solution du caisson d'indice 3 s'écoule par gravité dans le caisson d'indice 2, puis dans celui d'indice 3.

De plus, un écoulement similaire du caisson terminal **N4** vers le caisson **N3** est également possible, via une conduite 81.

On a désigné par la référence 7 un réservoir contenant de l'acide sulfurique, par la référence 7' un réservoir contenant de l'acide nitrique, par la référence 8 un réservoir d'eau, et par la référence 9 un réservoir de potasse, de chaux ou de soude.

Avantageusement, l'eau est le distillat chaud prélevé dans le réceptacle 11 du déshydrateur.

Cette eau arrive dans l'épurateur **N4** par un conduit 80 ; le trop plein se vide, via le conduit 81 dans l'épurateur **N3**, puis successivement dans les épurateurs **N2** et **N1**.

Les résidus de traitement de vapeur sont évacués par un conduit 82 dans une cuve de stockage 84.

Le produit évacué est une solution d'AGV-NH₄.

Les acides sont amenés au moyen de pompes 70, 70' depuis les réservoirs 7 et respectivement 7' dans les épurateurs **A2** et **A3**, par l'intermédiaire d'électrovannes appropriées.

Les pompes 70, 70' sont des pompes doseuses, qui permettent d'ajuster les pourcentages d'acide sulfurique et nitrique.

A titre indicatif, le pourcentage de l'acide sulfurique est de l'ordre de 90 à 95 % et le pourcentage de l'acide nitrique de 5 à 10%.

La présence de l'acide nitrique, même en faible pourcentage, est utile lorsque les composants constitutifs de l'épurateur (caissons, cuves et tuyauteries notamment) sont en acier inoxydable.

En effet, l'acide nitrique permet de "passiver" ce matériau, pour améliorer sa résistance à la corrosion.

On notera qu'on injecte également de l'eau chaude dans l'épurateur acide **A3** ; ceci permet de maintenir constantes les températures de traitement dans les épurateurs acides, et de maintenir constante la valeur des pH choisie pour **A1** et **A2**.

Les températures d'équilibre vapeur-solution des épurateurs **A** dépendent de la concentration respective de leur solution d'épuration.

Ces températures peuvent aller de 101 à 110° C suivant les quantités d'acide et de sel présents dans les caissons.

A la sortie de **A1** la solution est neutre, et est stockée via une conduite 71 dans une cuve 72.

On y trouve également du sulfate d'ammonium, un peu de nitrate d'ammonium, et des complexes contenant des phénols.

Cette solution de fin d'épuration de fin acide sera traitée ultérieurement.

Les épurateurs basiques **B** reçoivent leurs additifs au niveau des épurateurs **B2** et **B3**, via une pompe 90 et des conduits 91, respectivement 92.

L'épurateur **B3** reçoit également de l'eau chaude du réservoir 8, via une canalisation 81 munie d'une électro-vanne.

La solution basique, par exemple une solution de potasse, est amenée du réservoir 9 dans **B3** et **B2** au moyen d'une pompe 90.

La régulation des épurateurs basiques, comme celle des épurateurs acides, s'effectue en agissant sur les quantités d'eau et de potasse injectées dans chacun des épurateurs **B2** et **B3** de façon à maintenir constantes les températures choisies pour le traitement dans ces épurateurs, et également à maintenir constantes les valeurs des pH choisies pour **B1** et **B2**. A la sortie de **B1** la solution est partiellement neutralisée, et elle est stockée dans le réservoir 94, via une conduite 93.

Les épurateurs **N**, comme déjà dit, permettent une combinaison entre l'ammoniac et les AGV pour former des acétates d'ammonium.

Si, dans la vapeur à traiter, l'ammoniac est excédent, la presque totalité des AGV est bloquée dans ces épurateurs **N**.

Les épurateurs acides **A** vont bloquer la totalité de l'ammoniac résiduel et une grande partie des phénols.

Les épurateurs basiques **B** vont bloquer le dioxyde de carbone restant, les AGV restant, et une partie des phénols.

Enfin, l'épurateur neutre **N4,** qui ne contient que de l'eau lentement renouvelée, sert de protection tampon pour le compresseur. Il bloque, entre autres, les particules fines basiques provenant de l'épurateur **B3** et ayant franchi le dispositif dévésiculeur 52 de celui-ci.

Ces particules fines sont des gouttelettes de très faible volume formant une brume non arrêtée par le dévésiculeur, et qui risquerait de contrarier le fonctionnement du compresseur.

Inévitablement, il reste tout de même à la sortie du dernier épurateur **N4** des traces de CO₂, d'air, de méthane, et d'hydrogène, ainsi que la totalité des solvants (alcools, éthers, acétone, aldéïdes, etc, et plusieurs composés très malodorants).

Ces produits restants seront éliminés par la purge prévue à l'intérieur du déshydrateur.

L'ensemble constitué par le déshydrateur et l'installation d'épuration chimique fonctionnent de la manière suivante :

La vapeur épurée est amenée par le compresseur 3 dans l'enceinte de condensation 21 du déshydrateur **D**.

La pression du compresseur doit être légèrement supérieure à la pression atmosphérique pour éviter une entrée d'air parasitaire.

La vanne motorisée 120 est pilotée en fonction de la température de sortie du compresseur, l'eau de distillation prélevée dans le réceptacle 11 servant au besoin à la "désurchauffe", c'est à dire à refroidir le compresseur pour éviter qu'il ne monte excessivement en température. Cette eau se retrouve sous forme de vapeur dans le circuit d'amenée de la vapeur, et est réinjectée par la conduite 100 dans l'enceinte de condensation.

La vapeur arrivant dans le disque supérieur descend progressivement vers le bas, de disque en disque, en suivant une trajectoire en chicane, due à la présence des cloisons centrales 22, comme cela a été expliqué plus haut. Ce mode de circulation de vapeur empêche la formation de poches inertes d'incondensables ou de vapeurs parasites, et joue un rôle important dans le bon fonctionnement du déshydrateur.

Poussées par la vapeur, les substances incondensables et les vapeurs parasites se concentrent dans le disque du bas. Tous ces incondensables, sauf l'hydrogène (très rare) ont des masses molaires beaucoup plus grandes que celles de la vapeur d'eau, et c'est pourquoi on les fait arriver dans les disques par le haut.

Pour éviter que le disque du bas ait un pourcentage d'incondensables trop important, on purge ces disques par la tubulure 15 ; l'autre tubulure 14 qui communique avec le disque supérieur constitue une sécurité destinée à éviter l'accumulation éventuelle d'hydrogène à ce niveau.

Grâce au système récupérateur de chaleur 4, décrit plus haut on récupère l'énergie des produits de purge.

En passant dans le serpentin, la vapeur d'eau chargée de la purge va libérer son énergie en se condensant, ce qui a pour effet d'évaporer la même quantité d'eau du bac 40.

Ainsi on remplace par de la vapeur propre dans l'enceinte 10 la même quantité de vapeur perdue par la purge. La perte d'énergie résultante est seulement celle que va consommer le compresseur 3 pour remettre cette vapeur dans les disques d'où elle est sortie.

Pour un déshydrateur à compression mécanique ayant un coefficient de performance d'environ 20, la perte d'énergie résultante est comprise entre environ 0,6 et 3,2 kWh/m³, ce qui est relativement faible et parfaitement acceptable sur le plan économique.

Comme cela a été expliqué plus haut, le condensat récupéré dans la cuve 42 est réinjecté dans le bac 40, tandis que les substances incondensables malodorantes sont brûlées par pyrolyse au moyen du brûleur 45.

Au fur à mesure de la déshydratation de la matière par les disques 2, les vapeurs produites dans la chambre d'évaporation 10 sont évacuées par la conduite 101 en direction de l'épurateur 5.

Dans cet épurateur s'opère le traitement chimique par passage de la vapeur chaude (à 100° C) successivement à travers les pluies de solution de traitement neutre, acide et basique, comme cela a été expliqué en détail plus haut.

La cuve de stockage 84 disposée à la sortie de l'épurateur **N1** pourrait être remplacée par un concentrateur thermique, qui aboutirait à des solutions très concentrées d'AGV-NH₄, qui pourrait avoir d'autres applications en particulier l'extraction du dioxyde de carbone et d'ammoniaque concentré.

Dans cette hypothèse de concentration des solutions AGV₂- NH₄, cela permet de réduire la consommation d'acides, et pratiquement d'annuler la consommation de potasse, qui est très chère.

Avec des déjections animales par exemple, suivant le vieillissement et suivant certains prétraitements, on peut obtenir des vapeurs dont les proportions d'AGV et NH₄ sont équilibrées ; dans ce cas la consommation d'acides et de potasse peut être proche de zéro.

Ensuite, avec ces solutions très concentrées, on peut envisager d'extraire l'ammoniac sélectivement, pour d'autres applications valorisantes.

La cuve 84 pourrait également être remplacée par un réacteur chimique cyclique dans lequel on injecte de la chaux, comme cela est symbolisé par la flèche 83 sur la figure 5 ; ce réacteur est ainsi adapté pour former des sels (AGV)₂ Ca, très stable et peu coûteux ; en fin de cycle, le contenu du réacteur 84 peut être transféré dans la cuve 94, via, comme symbolisé par la conduite 840. Dans cette hypothèse, où on fait réagir la solution avec de la chaux, l'ammoniac se retrouve dans le circuit, et il n'y a plus d'économie d'acide. Par contre, l'ammoniac étant excédentaire dans la vapeur, les AGV sont bloqués par la chaux et la consommation de potasse dans les épurateurs **B** devient faible.

Il faut savoir qu'à valence égale la chaux est quinze fois moins coûteuse que la potasse ; malheureusement la faible solubilité de la chaux rend son utilisation difficile dans les épurateurs **B**.

Les solutions d'épuration acides et basiques sont respectivement stockées, comme déjà dit, dans les cuves 72 et 94. En déshydratant séparément ces solutions, on obtient des produits secs et stockables.

En revanche, il n'est pas possible de les mélanger et de les déshydrater ensemble, car une grande partie de l'ammoniac et des AGV bloqués dans ces solutions serait libérée.

Lorsque les sels sont secs, il est possible de les mélanger, puis de les utiliser.

Si on prend l'exemple du traitement du lisier de porcs avec un déshydrateur à trente disques, l'une des solutions consiste à déshydrater le lisier avec 28 disques, de sécher les solutions de sulfate et de nitrate d'ammonium sur le vingt-neuvième disque, de sécher les (AGV)₂ Ca + AGV K + carbonate sur le trentième disque.

Une autre solution consiste à mélanger dans une cuve mélangeuse **X** les solutions d'épuration avec le lisier provenant de la cuve mélangeuse-agitatrice normale **Y** qui alimente en lisier le déshydrateur **D**.

C'est ce mélange de lisier et de solutions qui est envoyé dans le sécheur **D**, partiellement représenté sur la partie inférieure droite de la figure 5.

Etant donné qu'il est impossible de déshydrater ensemble les solutions d'épuration acides et basiques, on procède alors de manière séquentielle.

Pendant la première séquence on mélange le lisier provenant de la mélangeuse-agitatrice **Y** à la solution d'épuration acide provenant de la cuve 72, pendant une heure environ (volume de 1m³ au total), et on l'amène au déshydrateur **D**.

Pendant la séquence suivante, on introduit dans le déshydrateur seulement du lisier provenant du mélangeur **Y**.

Dans une troisième séquence, on amène au déshydrateur un mélange de lisier et de solution d'épuration basique, provenant de la cuve 94.

Pour la quatrième séquence, on amène au déshydrateur du lisier seul.

Ce séquencement est réitéré.

A la sortie, si le produit sort sous forme de granulés, on aura des granulés de lisier mélangés à des granulés de sulfate, des granulés de lisier seul ou des granulés de lisier mélangés à un produit AVGCa ou K.

Tous ces granulés, une fois secs, peuvent être mélangés sans difficulté, et on retrouve sous une autre forme tous les composants du lisier de départ.

Toutes ces séquences sont exécutées au moyen d'une pompe 900 et d'électro-vannes appropriées 720, 940.

Au lieu d'utiliser un mélangeur séparé **X**, on pourrait faire usage de réservoirs mélangeurs 72, 94 ; la sortie de ces mélangeurs, ainsi que celle du mélangeur **Y,** seraient commutées séquentiellement vers le déshydrateur **D**.

La présente invention s'adresse non seulement au traitement des déjections animales, mais au traitement d'autres matières variées, notamment des boues de station d'épuration et des rejets d'usine agro-alimentaire.

## Revendications

1. Déshydrateur à compression mécanique de la vapeur équipé d'un compresseur (3), dont l'enceinte de condensation (21) est constituée par un empilement de disques creux horizontaux communicants (2), portés par un arbre central tubulaire (20) rotatif, d'axe vertical (**ZZ'**), cet empilement étant installé à l'intérieur d'une cuve (1) constituant l'enceinte d'évaporation (10), la matière à déshydrater étant épandue sous forme d'une couche mince sur la face supérieure des disques, **caractérisée par le fait qu'**à l'intérieur de chaque disque (2) est montée une cloison discoïde horizontale (22) fixée à l'arbre central (20), et de diamètre inférieur à celui des disques creux (2), cette cloison étant espacée par rapport aux deux faces horizontales du disque, et constituant une chicane pour le cheminement de la vapeur.

2. Déshydrateur selon la revendication 1, **caractérisé par le fait qu'**il comprend un système récupérateur de chaleur comprenant un serpentin (41) qui est immergé dans un bac d'eau (40) disposé à l'intérieur de l'enceinte d'évaporation (10), dans lequel on fait passer les vapeurs véhiculant les gaz incondensables.

3. Déshydrateur selon la revendication 2, **caractérisé par le fait qu'**il comporte des moyens (421,420) pour ramener dans le bac (40) l'eau de condensation présente dans les vapeurs à la sortie dudit serpentin (41).

4. Déshydrateur selon l'une des revendications 1 à 3, **caractérisé par le fait qu'**il comporte un brûleur (45) apte à brûler les gaz incondensables à leur sortie.

5. Installation d'épuration de la vapeur associée à un déshydrateur conforme à l'une des revendications 1 à 4, qui comprend un ensemble (5) d'épurateurs (50) montés en série à la suite les uns des autres, des moyens (101) pour amener la vapeur à épurer à l'entrée (500) de cet ensemble (5), et des moyens (30) pour évacuer la vapeur traitée vers le compresseur (3) équipant le déshydrateur, chacun des épurateurs (50) affectant la forme d'un caisson à l'intérieur duquel sont disposés des moyens (60,600) aptes à générer, par centrifugation, une pluie de gouttelettes d'une solution épuratrice (S) que la vapeur, qui est portée à une température sensiblement égale à 100°C, est obligée de traverser, et que l'une au moins des pluies est de l'eau, qu'une autre au moins contient un acide et qu'une troisième au moins contient une base.

6. Installation selon la revendication 5, **caractérisée par le fait que** ledit ensemble (5) comprend au moins trois batteries (N,A,B) de plusieurs épurateurs (50) l'une (N) assurant un traitement de la vapeur à l'eau, l'autre (A) assurant un traitement à l'acide, et l'autre (B) assurant un traitement basique.

7. Installation selon la revendication 6, **caractérisée par le fait que** chacune desdites batteries (N,A,B) est reliée à une cuve distincte (84,72,94) recueillant les solutions ayant servi au traitement.

8. Procédé d'épuration chimique de la vapeur dans un déshydrateur à compression mécanique de la vapeur mettant en oeuvre un déhydrateur selon l'une des revendications 1 à 4 ou bien une installation selon l'une des revendications 5 à 7, selon lequel on prélève la vapeur dans l'enceinte de condensation (10) du déshydrateur et on la fait passer successivement, avant de la comprimer, à une température sensiblement égale à 100° C, dans une série d'épurateurs (50) et on la force à traverser, dans chacun de ces épurateurs, une pluie contenant une solution épuratrice (S), l'une au moins des pluies étant de l'eau, une autre contenant un acide, et une autre contenant une base.

9. Procédé selon la revendication 8, **caractérisé par le fait que** l'acide est une solution comprenant de l'acide sulfurique et de l'acide nitrique.

10. Procédé selon la revendication 8 ou 9, **caractérisé par le fait que** la base est une solution de chaux, de potasse ou de soude.

11. Procédé selon l'une des revendications 8 à 10, **caractérisé par le fait qu'**on génère la pluie au moyen d'un tube rotatif (60) percé d'une multitude de petits trous (600) à l'intérieur duquel se trouve la solution (**S**), celle-ci étant projetée par centrifugation sous forme de fines gouttelettes à l'extérieur du tube.

## Patentansprüche

1. Entfeuchter mit mechanischer Verdichtung des Dampfs, welcher mit einem Verdichter (3) ausgestattet ist, dessen Kondensationsraum (21) aus einem Stapel von hohlen, horizontalen, miteinander in Verbindung stehenden Scheiben (2), welche durch eine rotierende röhrenförmige zentrale Welle (20) mit vertikaler Achse (ZZ') getragen werden, gebildet wird, wobei dieser Stapel im Inneren eines Behälters (1), welcher den Verdampfungsraum (10) bildet, installiert ist, wobei das zu entfeuchtende Material in Form einer dünnen Schicht auf der oberen Fläche der Scheiben ausgebreitet ist, **dadurch gekennzeichnet, dass** im Inneren von jeder Scheibe (2) eine scheibenartige horizontale Zwischenwand (22), welche an der zentralen Welle (20) befestigt ist und einen Durchmesser aufweist, welcher geringer ist als jener der hohlen Scheiben (2), montiert ist, wobei diese Zwischenwand bezogen auf die beiden horizontalen Flächen der Scheibe mit Zwischenraum angeordnet ist und ein Hindernis für die Fließbewegung des Dampfs bildet.

2. Entfeuchter nach Anspruch 1, **dadurch gekennzeichnet, dass** dieser ein Wärmerückgewinnungssystem umfasst, welches eine Rohrschlange (41) umfasst, die in einen Wasserbehälter (40), welcher im Inneren des Verdampfungsraums (10) angeordnet ist, eingetaucht ist, durch welche man die Dämpfe, die die nicht kondensierbaren Gase mitschleppen, hindurchleitet.

3. Entfeuchter nach Anspruch 2, **dadurch gekennzeichnet, dass** dieser Mittel (421, 420) umfasst, um das in den Dämpfen beim Austritt aus der Rohrschlange (41) vorhandene Kondensationswasser in den Behälter (40) zurückzuführen.

4. Entfeuchter nach einem der Ansprüche 1 bis 3, **dadurch gekennzeichnet, dass** dieser einen Brenner (45) umfasst, welcher in der Lage ist, die nicht kondensierbaren Gase bei deren Austritt zu verbrennen.

5. Einrichtung zur Reinigung von Dampf, welche mit einem Entfeuchter nach einem der Ansprüche 1 bis 4 kombiniert ist, welche eine Gesamtheit (5) von Reinigungsvorrichtungen (50), welche in Reihe eine hinter der anderen montiert sind, Mittel (101), um den zu reinigenden Dampf zum Einlass (500) dieser Gesamtheit (5) zu leiten, und Mittel (30), um den behandelten Dampf in Richtung des Verdichters (3), mit dem der Entfeuchter ausgestattet ist, abzuziehen, umfasst, wobei jede der Reinigungsvorrichtungen (50) die Form eines Kastens annimmt, in dessen Innerem Mittel (60, 600) angeordnet sind, welche in der Lage sind, durch Zentrifugation einen Regen von Tröpfchen einer Reinigungslösung (S) zu erzeugen, den der Dampf, welcher auf eine Temperatur von im wesentlichen gleich 100°C erwärmt wird, durchqueren muss, und dass wenigstens einer der Regengüsse aus Wasser besteht, dass wenigstens ein anderer eine Säure enthält und dass wenigstens ein dritter eine Base enthält.

6. Einrichtung nach Anspruch 5, **dadurch gekennzeichnet, dass** die Gesamtheit (5) wenigstens drei Batterien (N, A, B) von mehreren Reinigungsvorrichtungen (50) umfasst, wobei die eine (N) eine Behandlung des Dampfs mit Wasser sicherstellt, die andere (A) eine Behandlung mit Säure sicherstellt und die andere (B) eine basische Behandlung sicherstellt.

7. Einrichtung nach Anspruch 6, **dadurch gekennzeichnet, dass** jede der Batterien (N, A, B) mit einem unterschiedlichen Gefäß (84, 72, 94), welches die Lösungen, die für die Behandlung gedient haben, sammelt, verbunden ist.

8. Verfahren zur chemischen Reinigung des Dampfs in einem Entfeuchter mit mechanischer Verdichtung des Dampfs unter Einsatz eines Entfeuchters nach einem der Ansprüche 1 bis 4 oder ebenso einer Einrichtung nach einem der Ansprüche 5 bis 7, gemäß welchem man den Dampf in dem Kondensationsraum (10) des Entfeuchters entnimmt und man diesen, bevor man diesen verdichtet, bei einer Temperatur von im wesentlichen gleich 100°C nacheinander eine Reihe von Reinigungsvorrichtungen (50) durchströmen lässt und man diesen dazu zwingt, in jeder dieser Reinigungsvorrichtungen durch einen Regen, welcher eine Reinigungslösung (S) enthält, hindurchzutreten, wobei wenigstens einer der Regengüsse aus Wasser besteht, ein anderer eine Säure enthält und ein anderer eine Base enthält.

9. Verfahren nach Anspruch 8, **dadurch gekennzeichnet, dass** die Säure eine Lösung, die Schwefelsäure und Salpetersäure umfasst, ist.

10. Verfahren nach Anspruch 8 oder 9, **dadurch gekennzeichnet, dass** die Base eine Lösung von Kalk, von Kali oder von Soda ist.

11. Verfahren nach einem der Ansprüche 8 bis 10, **dadurch gekennzeichnet, dass** man den Regen mittels eines rotierenden Rohrs (60), welches von einer Mehrzahl von kleinen Löchern (600) durchbohrt ist, im Inneren von welchem sich die Lösung (S) befindet, wobei diese durch Zentrifugation in Form von feinen Tröpfchen auf die Außenseite des Rohrs herausgeschleudert wird, erzeugt.

## Claims

1. A dehydrator having mechanical vapor compression, the dehydrator being fitted with a compressor (3), and having a condensation chamber (21) that is constituted by a stack of intercommunicating horizontal hollow disks (2) carried by a central rotary tubular shaft (20) having a vertical axis (ZZ'), said stack being installed inside a vessel (1) constituting the evaporation chamber (10), the matter to be dehydrated being applied in the form of a thin layer onto the top faces of the disks, the installation being **characterized by** the fact that inside each disk (2) there is received a horizontal disk-shaped partition (22) fixed to the central shaft (20), with the diameter of the partition being smaller than that of the hollow disk (2), said partition being spaced apart from both horizontal faces of the disk and constituting a baffle for directing vapor flow.

2. A dehydrator according to claim 1, **characterized by** the fact that it comprises a heat recovery system comprising a coil (41) immersed in a trough of water (40) disposed inside the evaporation chamber (10), with the vapor conveying non-condensable gas being caused to flow in the coil.

3. A dehydrator according to claim 2, **characterized by** the fact that it includes means (421, 420) for delivering the condensation water presente in the vapor at the outlet from said coil (41) into the trough (40).

4. A dehydrator according to claim 1 to 3, **characterized by** the fact that it includes a burner (45) suitable for burning off the non-condensable gas at its outlet.

5. An installation for purifying vapor associated with a dehydrator according to any one of claims 1 to 4, which installation comprises a set (5) of purifiers (50) connected in series one after another, means (101) for bringing the vapor to be purified to the inlet (500) of said set (5), and means (30) for feeding the treated vapor to the compressor (3) forming part of the dehydrator, each of the purifiers (50) being in the form of a box within which there are disposed means (60, 600) suitable for generating, by centrifuging, a rain of droplets of a purifying solution (S) through which the vapor is constrained to pass, which vapor is raised to a temperature substantially equal to 100°C, and that at least one of the rain solutions is water, at least one other contains an acid, and at least a third contains a base.

6. An installation according to claim 5, **characterized by** the fact that said set (5) comprises at least three purifier banks (N, A, B), each comprising a plurality of purifiers (50), one of the banks (N) treating the vapor with water, another (A) treating it with acid, and another (B) treating it with a base.

7. An installation according to claim 6, **characterized by** the fact that each of said banks (N, A, B) is connected to a distinct vessel (84, 72, 94) for recovering the solutions that have been used for treatment purposes.

8. A method of chemically purifying vapor in a dehydrator with mechanical vapor compression, the method implementing a dehydrator according to any one of claims 1 to 4, or else an installation according to any one of claims 5 to 7, in which method the vapor is taken from the condensation chamber (10) of the dehydrator and, prior to being compressed and at a temperature substantially equal to 100°C, it is caused to pass in succession through a series of purifiers (50), and in each of the purifiers it is forced through rain containing a purifying solution (S), at least one of the rain solutions being water, another containing an acid, and another containing a base.

9. A method according to claim 8, **characterized by** the fact that the acid is a solution comprising sulfuric acid and nitric acid.

10. A method according to claim 8 or claim 9, **characterized by** the fact that the base is a solution of lime, of potassium hydroxide, or of sodium hydroxide.

11. A method according to any one of claims 8 to 10, **characterized by** the fact that the rain is generated by means of a rotary tube (60) pierced by a multitude of small holes (600), the inside of the tube containing the solution (S), said solution being sprayed centrifugally in the form of fine droplets to the outside of the tube.
